# EUROPÄISCHE PATENTSCHRIFT

(11) **EP 1 732 802 B1**
(45) Veröffentlichungstag und Bekanntmachung des Hinweises auf die Patenterteilung: **20.02.2008**
(21) Anmeldenummer: 05716278.6
(22) Anmeldetag: 22.03.2005
(51) Int. Cl.: B62D 53/08, F16N 11/00

(54) **SYSTEM ZUM SCHMIEREN EINER VERSCHLUSSMECHANIK, VERSCHLUSSRIEGEL UND VERSCHLUSSHAKEN**
SYSTEM FOR LUBRICATING A CLOSING MECHANISM, A CLOSING BAR AND CLOSING HOOK
SYSTEME DE LUBRIFICATION D'UN MECANISME DE VERROUILLAGE, PENE ET CROCHET DE VERROUILLAGE

(30) Priorität: 01.04.2004 DE 102004016005
(43) Veröffentlichungstag der Anmeldung: 20.12.2006
(73) Patentinhaber: Jost-Werke GmbH, 63263 Neu-Isenburg (DE)
(72) Erfinder: SCHMIDT, Dirk, 61462 Königstein (DE); ALGÜERA, José, 63738 Aschaffenburg (DE); ZHANG, Fan, 65479 Raunheim (DE); SEIGIS, Heinz-Jürgen, 63776 Mömbris (DE); POHL, Wolfgang, 63303 Dreieich (DE)
(74) Vertreter: Fuchs
(86) Internationale Anmeldenummer: PCT/EP2005/003018
(87) Internationale Veröffentlichungsnummer: WO 2005/097584

(56) Entgegenhaltungen:
- EP-A- 0 507 342
- EP-A- 0 994 289
- DE-A1- 4 304 857
- DE-U1- 9 401 718

## Beschreibung

Die Erfindung betrifft ein System zum Schmieren einer Verschlussmechanik an Sattelkupplungen mit einer an der Unterseite einer Kupplungsplatte angeordneten Verschlussmechanik, die mindestens einen Verschlusshaken und einen Verschlussriegel aufweist, und einem Fettreservoir, welches über eine Schmierleitung mit dem Verschlusshaken verbunden ist. Ein solches System wird in der DE 94 01 71841 beschrieben. Darüber hinaus wird ein beschichteter Verschlusshaken und ein Verschlussriegel sowie die Verwendung einer Beschichtung für die Herstellung von Verschlusshaken und -riegel geschützt.

Die Sattelkupplungen sind üblicherweise auf LKW-Zugmaschinen montiert und nehmen in angekuppeltem Zustand den Königszapfen eines Aufliegers auf. Nach dem Ankuppeln des Aufliegers wird über einen an der Sattelkupplung angeordneten Betätigungsgriff oder auch über einen aus dem Führerhaus der Zugmaschine femgesteuerbaren Antrieb die Verschlussmechanik der Sattelkupplung aus einer einfahrbereiten Öffnungsstellung in eine Verschlussstellung gebracht. Üblicherweise umschließ dazu ein zu der Verschlussmechanik gehöriger Verschlusshaken zumindest teilweise den in die Sattelkupplung eingefahrenen Königszapfen. In Abhängigkeit der konkreten konstruktiven Ausgestaltung der Sattelkupplung kann der Verschlusshaken und der Königszapfen zusätzlich durch einen Verschlussriegel gesichert sein. Im Fahrbetrieb unterliegt insbesondere der Verschlusshaken mit seinen Kontaktflächen zum Königszapfen und zum Verschlussriegel aber auch der Verschlussriegel mit seiner Kontaktfläche zum Verschlusshaken in mehrfacher Hinsicht höchsten Belastungen.

Die Belastungen werden in hohem Maße durch eine Relativbewegung zwischen dem Königszapfen und den damit in Kontakt stehenden Reibflächen des Verschlusshakens bzw. Verschlussriegels hervorgerufen, die von zusätzlichen Stoßbelastungen überlagert werden, wodurch es schon nach kurzer Zeit zu einem verschleißbedingten Materialabtrag sowohl seitens des Königszapfens als auch des Verschlusshakens kommt. Die Relativbewegung resultiert aus den Lenkbewegungen der Zugmaschine. Diese mechanische Belastung wird zusätzlich noch durch korrosive Einflüsse verschärft, beispielsweise hervorgerufen durch Kontakt mit Diesel und einem unvermeidbaren Sandeintrag in den Bereich der Verschlussmechanik.

Die überwiegende Anzahl der Verschlusshaken sind vom Hersteller mit einer Beschichtung versehen. Bei dieser Beschichtung handelt es sich um eine Korrosionsschutzschicht, die mittels einer kathodischen Tauchlackbeschichtung hergestellt wird.

Um den Verschleiß zu minimieren, wird der problematische Bereich der Reibflächen am Verschlusshaken und/oder Verschlussriegel intensiv mit Schmierfett abgeschmiert. Dieses kann beispielsweise von Hand vom Fahrer vorgenommen werden oder, falls vorhanden, automatisiert über die Zentralschmieranlage des Zugfahrzeuges. Eine derartige Schmiervorrichtung ist beispielsweise in der DE 94 01 718 U1 erwähnt. Ein wesentliches Bauelement stellt dabei ein auf der Unterseite der Kupplungsplatte angeordneter Verteilerblock dar, der über eine Zufuhrleitung mit einem zentralen Schmiermittelvorrat verbunden ist und von dem unter anderem eine Schmierleitung zu dem Verschlusshaken verläuft. Die Schmierung des Verschlusshakens erfolgt aus dem Schmiermittelvorrat über die Zufuhrleitung durch den Verteilerblock und die Schmierleitung.

Der wesentliche Nachteil dieses Schmiersystems liegt in dem hohen Schmierfettverbrauch von mehreren Kilogramm pro Jahr und der dadurch einhergehenden Umweltverschmutzung. Darüber hinaus lagern sich in dem überschüssigen Schmierfett Feststoffe an, die im Fahrbetrieb aufgrund eines Pumpeffektes zwischen Königszapfen und den Reibflächen eingezogen werden und dort für eine weitere Erhöhung des Verschleißes sorgen.

Aus diesem Grund wurden bereits Bestrebungen unternommen, den Schmierfettverbrauch durch Beschichtungen des Verschlusshakens oder Königszapfens zu verringern. Eine derartige Sattelkupplung wird in der DE 196 24 803 A1 beschrieben. Die dabei verwendete Antifriktionsschicht besteht aus einer kohlenstoffbasierenden Schicht, unter welcher reine Kohlenstoffschichten mit diamantähnlicher Struktur, metallhaltige Kohlenstoffschichten oder amorphe Kohlenstoffschichten, die entweder rein oder metallhaltig sind, verstanden werden. Der wesentliche Nachteil der bekannten Beschichtung liegt in der extrem hohen Härte gegenüber dem deutlich elastischeren Materials des Verschlusshakens. In der Praxis führt dies zu einem Eierschaleneffekt, das heißt einem flächenartigen Abplatzen der Beschichtung und einem daraus resultierenden hohen Reibwert sowie einer damit einhergehenden raschen Zerstörung des Verschlusshakens.

Eine andere Beschichtung des Verschlusshakens und des Verschlussriegels einer Sattelkupplung offenbart die DE 43 04 857. Die Beschichtung umfasst eine auf das Grundmaterial aufgespritzte Hartstoffschicht und eine darauf aufgebrachte Gleitschicht, wobei die Gleitschicht ein PTFE Material enthält. Darüber hinaus ist die Dicke der Gleitschicht kleiner als 50 µm und so bemessen, dass die Gleitschicht Spitzen der Hartstoffschicht dünn überzieht und zwischen den Spitzen liegende Täler ausfüllt. Ein vollkommen schmierfettfreies System hat sich jedoch im Praxisbetrieb nicht durchsetzen können, da der Verschleiß der beteiligten Komponenten bei einer Dauerbelastung zu erheblich ist.

Der Erfindung liegt deshalb die Aufgabe zugrunde, ein System zum Schmieren der Verschlussmechanik und der darin verbauten Einzelkomponenten dahingehend zu verbessern, dass der Schmierfettverbrauch bei hoher betrieblicher Verfügbarkeit dauerhaft und erheblich unabhängig von dem Vorhandensein einer Zentralschmieranlage reduziert wird.

Die Aufgabe wird erfindungsgemäß mit einem System gelöst, bei dem der Verschlusshaken und/oder der Verschlussriegel mit einer Beschichtung versehen ist und die Beschichtung des Verschlusshakens und/oder Verschlussriegels als Gleitbeschichtung ausgebildet und das Fettreservoir eine Fettkartusche ist, wobei die Fettkartusche an der Sattelkupplung angeordnet ist.

Unter Gleitbeschichtung wird eine Beschichtung verstanden, die vorzugsweise eine Hartkomponente, z. B. eine lasttragende Schicht, und eine Weichkomponente, d. h. eine Schicht im Vergleich zur lasttragenden Schicht weichere Schicht, umfasst. Als Hartkomponente kommen dafür beispielsweise Eisenlegierungen in Frage, vorzugsweise mit Nickel- oder Molybdänbestandteilen, als Weichkomponente beispielsweise PTFE.

Die Fettkartusche ist an der Sattelkupplung, an der Montageplatte oder am Rahmen angeordnet, besonders bevorzugt an der Unterseite der Kupplungsplatte. Aufgrund der geringen benötigten Fettmenge können die Fettkartuschen hinsichtlich ihrer Baugröße derart klein gebaut sein, dass sie mittels Klammern an geschützter Stelle ohne Aufwand angebracht werden können. Nach dem Anbringen der Fettkartusche braucht lediglich noch eine Schmierleitung zu dem zu schmierenden Bauteil, vorzugsweise dem Verschlusshaken, angebracht zu werden.

Vorteilhafterweise ist das Fettreservoir eine der Sattelkupplung zugeordnete Fettkartusche. Der mit der Gleitbeschichtung versehene Verschlusshaken oder Verschlussriegel wird nunmehr über die Fettkartusche und eine Schmierleitung mit einer definierbaren äußerst geringen Schmierfettmenge versorgt. Die jährlich benötigte Schmierfettmenge liegt bei dem erfindungsgemäßen System deutlich niedriger als bei den bisherigen im Einsatz befindlichen Systemen.

Aufgrund der geringen Schmierfettmenge und der systembedingt frei wählbaren Schmierstofftypen werden kaum Fremdpartikel in dem Schmierfett eingebettet, wodurch die Lebenszeit der betroffenen Bauteile zusätzlich erhöht wird. Ein weiterer Vorteil des erfindungsgemäßen Systems besteht in der Möglichkeit der autarken Inbetriebnahme, unabhängig von der technischen Fahrzeugausrüstung. Ein Vorhandensein einer Zentralschmieranlage beim Zugfahrzeug ist nicht notwendig und auch das Nachrüsten bei bereits im Einsatz stehenden Fahrzeugen kann ohne großen Aufwand erfolgen.

Vorteilhafterweise weist die Fettkartusche einen Antrieb auf. Hierbei kann es sich beispielsweise um einen elektromechanischen Antrieb handeln, der im Wesentlichen einen Zahnradmotor umfasst und über austauschbare Batterien mit Strom versorgt wird. Die elektromechanischen Antriebe ermöglichen eine präzise Schmierfettzufuhr, weitgehend unabhängig von der vorherrschenden Außentemperatur. Einsatztemperaturen von -30°C bis 80°C sind realisierbar. In die elektromechanisch angetriebene Fettkartusche lässt sich eine automatische Drucksteuerung von günstigerweise 5 bar integrieren, welche günstigerweise mit Daten aus der Fahrzeugelektronik angesteuert wird.

Alternativ zu der vorstehend beschriebenen Ausführungsform mit einem elektromechanischen Antrieb kann auch ein chemischer Antrieb eingesetzt werden. Bei dem chemischen Antrieb wird in der Fettkartusche ein Kolben durch Bildung eines Gases kontinuierlich vorgeschoben und drückt dadurch das Schmierfett aus der Kartusche in die daran angeschlossene Schmierleitung. Die Gasentwicklung wird durch das Eindrehen einer Aktivierungsschraube in die Fettkartusche in Gang gesetzt. Hierdurch werden zwei verschiedene Metalle in eine Säure, z.B. Zitronensäure, eingebracht und bilden ein galvanisches Element, d.h. das weniger edle Metall stellt einen negativen Pol dar und löst sich fortwährend auf, während das edlere Metall einen positiven Pol bildet, an welchem Wasserstoff abgeschieden wird. Die Fördermenge ist jedoch zumindest in geringem Maße von der Temperatur und Viskosität des Schmierfettes abhängig. Je niedriger die Temperatur und somit hochviskoser das Schmierfett ist, desto geringer ist die ausgebrachte Schmierfettmenge. Dennoch sind Temperaturen von - 20°C bis 55°C zu realisieren. Mit diesem chemischen Antrieb kann ein Druck von bis zu 4 bar aufgebaut werden. Aufgrund der robusten Bauweise ohne elektrische Bauteile ist auch ein Betrieb unter Wasser problemlos möglich.

In einer vorteilhaften Ausgestaltung ist der Antrieb der Fettkartusche mit einer variablen Steuereinrichtung verbunden. Dadurch kann Einfluss auf die gerade benötigte Fettmenge genommen werden, so dass beispielsweise bei Leerfahrten der Zugmaschine ohne aufgesattelten Auflieger die Fettzufuhr vollständig ausgeschaltet werden kann. In einer günstigen Ausführungsform weist die variable Steuereinrichtung einen eigenen Prozessrechner auf, der beispielsweise über eine Schnittstelle programmierbar ist. Bei dieser Ausführungsform könnten Kennlinien eingegeben werden, in denen jahreszeitabhängig ein größerer oder kleinerer Bedarf an Schmierfett vorgegeben ist.

Die variable Steuereinrichtung kann beispielsweise als Motorsteuereinrichtung ausgebildet sein. Hierbei wird direkt der Antrieb und somit die gewünschte Schmierfettmenge gesteuert.

Um die Schmierfettmenge unabhängig von dem Antrieb steuern zu können, kann die variable Steuereinrichtung auch als Ventilsteuereinrichtung ausgebildet sein.

Besonders bevorzugt umfasst die Ventilsteuereinrichtung ein in der Schmierleitung angeordnetes Mengenbegrenzungsventil, wobei das Mengenbegrenzungsventil mit der Ventilsteuereinrichtung verbunden ist. In diesem Fall wird also kein Einfluss auf den Antrieb der Fettkartusche genommen, sondern vielmehr auf ein Ventil in der Schmierleitung zu dem Verschlusshaken. Dieses kann dann für den Durchlass der gewünschten Schmierfettmenge mehr oder weniger weit geöffnet sein.

In einer besonderen Ausführung kommuniziert die variable Steuereinrichtung mit einem Fahrzeugsteuergerät. Über das Fahrzeugsteuergerät lassen sich alle am Fahrzeug gemessenen Daten bereitstellen, so dass auf das Vorhandensein eines Aufliegers geschlossen oder aufgrund der am Fahrzeug gemessenen Außentemperatur eine entsprechend größere Schmierfettmenge bereitgestellt werden kann. Eine Zufuhr des Schmierfettes könnte auch dann erfolgen, wenn der Motor des Zugfahrzeuges läuft.

Alternativ zu der Datenverbindung zu dem Fahrzeugsteuergerät kann auch die variable Steuereinrichtung zum Datenempfang an ein Kupplungssteuergerät angeschlossen sein. Kupplungssteuergeräte kommen häufig an fernbedienbaren Sattelkupplungen vor und ermöglichen ein automatisiertes An- und Abkuppeln des Aufliegers.

Hierfür sind die Kupplungssteuergeräte an eine Sensorik angeschlossen, mit welcher das Vorhandensein eines Aufliegers erkennbar ist, insbesondere durch Sensieren des Königszapfens eines Aufliegers. Durch Abgreifen der Daten des Kupplungssteuergerätes ist also auch eine Steuerung der Schmierfettmenge über die Motorsteuereinrichtung oder Ventilsteuereinrichtung möglich.

Für den Fall, dass kein Kupplungssteuergerät vorhanden ist, kann auch die variable Steuereinrichtung mit einem an der Kupplungsplatte angeordneten Drucksensor verbunden sein. Bei Vorhandensein eines Aufliegers wird auf die Kupplungsplatte ein Druck ausgeübt und von dem Drucksensor erkannt. Dieser Messwert wird von der variablen Steuereinrichtung ausgewertet und der Dosierung der Schmierfettmenge zugrunde gelegt.

Eine wesentliche Einzelkomponente stellt dabei der Verschlusshaken dar, dessen Beschichtung erfindungsgemäß als Gleitbeschichtung ausgebildet ist.

Die Lösung der Aufgabe besteht auch darin, die in dem System eingebauten Einzelkomponenten zu verbessern. Eine wesentliche Einzelkomponente stellt dabei der Verschlusshaken dar, dessen Beschichtung erfindungsgemäß als Gleitbeschichtung ausgebildet ist. Hierbei hat es sich als vorteilhaft erwiesen, dass die Gleitbeschichtung aus einem Mehrschichten-System aufgebaut ist.

Das Mehrschichten-System wiederum ist vorzugsweise aus mindestens einer ersten Schicht, welche eine Eisenlegierung mit Nickel- und Molybdänanteilen umfasst, und einer auf der ersten Schicht aufgebrachten zweiten Schicht aus PTFE aufgebaut.

Vor dem Aufbringen der erfindungsgemäßen Gleitbeschichtung wird die Oberfläche des zu beschichtenden Bauteiles mit einem Strahl aus Aluminiumoxid gereinigt. Anschließend wird eine Matrix aus Nickel-Eisen-Molybdän erzeugt und das PTFE als trockenes Schmiermittel in der beschichteten Oberfläche eingelagert.

Die Gleitbeschichtung hält unbeschadet sehr hohen und sehr niedrigen Temperaturen stand. Die Härte der Oberfläche steigt durch die Gleitbeschichtung auf das Doppelte an. Der Reibungskoeffizient beträgt bei Zusammenwirken mit den üblich verwendeten Königszapfen 0,14 bis 0,18.

Als weiteres günstiges Material hat sich noch eine Aluminium-Gleitbeschichtung mit Titan- und Chromanteilen herausgestellt.

Gemäß einer besonderen Ausführungsform ist die Gleitbeschichtung aus einer mehrstufigen thermischen Sprayschicht aufgebaut. Hieraus ergibt sich der Vorteil, dass keine den Verschlusshaken schwächende Temperatureinwirkung erforderlich ist. Der Verschlusshaken ist meistens wärmegehärtet und eine Temperaturbehandlung während des Beschichtungsvorganges würde dazu führen, dass die Härtung aufgehoben oder negativ beeinflusst wird, was wiederum zu einer Sprödigkeit des Verschlusshakens führen würde und die Bruchgefahr unter Belastung erheblich erhöht.

Vorteilhafterweise weist die Gleitbeschichtung eine Schichtdicke von 50 µm bis 150 µm auf, besonders bevorzugt 70 µm bis 130 µm, am meisten bevorzugt 76 µm bis 127 µm.

Eine zweite wesentliche Einzelkomponente stellt der Verschlussriegel dar, der ebenfalls mit einer als Gleitbeschichtung ausgebildeten Beschichtung versehen sein sollte. Von besonderem Interesse hinsichtlich des Verschleißes ist hierbei die Kontaktfläche zum Verschlusshaken und zum Königszapfen, weshalb es grundsätzlich ausreichen würde, ausschließlich die beanspruchten Flächen mit der Gleitbeschichtung zu versehen. Dieses ist fertigungstechnisch jedoch häufig aufwendiger, als das vollständige Bauteil zu beschichten.

Darüber hinaus ist die Verwendung einer Gleitbeschichtung für die Herstellung eines Verschlusshakens oder Verschlussriegels und die Verwendung eines mit einer Gleitbeschichtung versehenen Verschlusshakens oder Verschlussriegels zur Herstellung einer Sattelkupplung geschützt. Die dabei angesprochenen Gleitbeschichtungen weisen die vorstehend beschriebenen Merkmale auf.

Die Erfindung wird nachfolgend anhand der vier Zeichnungsfiguren näher erläutert. Es zeigen die:
- Fig. 1:: eine dreidimensionale schematische Darstellung einer Sattelkupplung mit daran angeordnetem Verschlusshaken, Verschlussriegel und Fettkartusche;
- Fig. 2:: eine dreidimensionale Ansicht auf einen Verschlusshaken mit einem Blickwinkel entgegen der Fahrtrichtung;
- Fig. 3:: eine dreidimensionale Ansicht auf einen Verschlusshaken mit einem Blickwinkel in Fahrtrichtung;
- Fig. 4:: eine dreidimensionale Ansicht auf einen Verschlussriegel

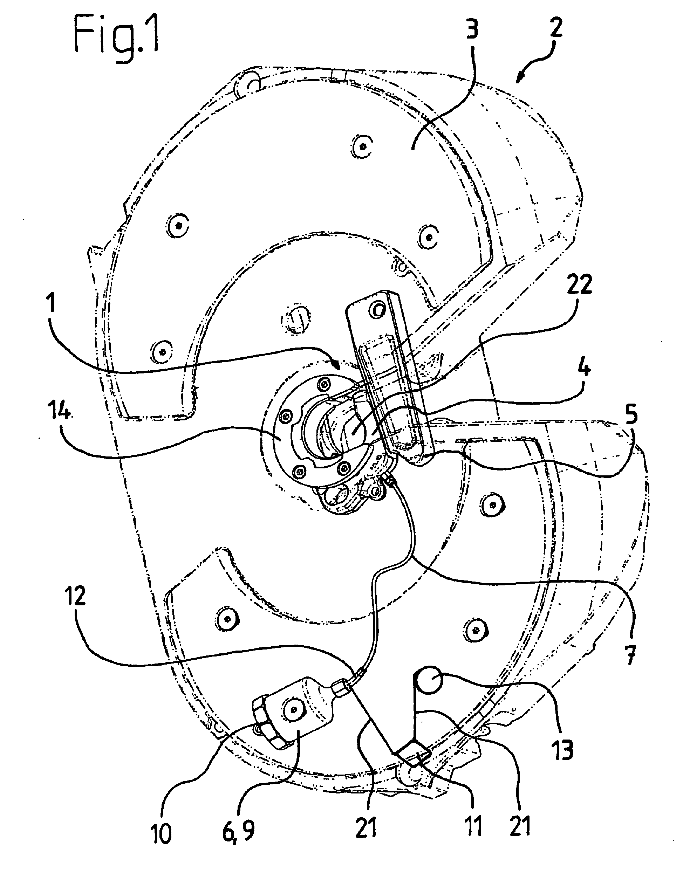

Die Fig. 1 zeigt schematisch in einer dreidimensionalen Ansicht eine Sattelkupplung 2 mit einer Kupplungsplatte 3 und einer in dieser Perspektive bei einer realen Kupplungsplatte 3 eigentlich nicht sichtbaren, an der Unterseite der Kupplungsplatte 3 angreifenden Verschlussmechanik 1. Zentrisch in der Kupplungsplatte 3 befindet sich die Lageröffnung 22 zur Aufnahme des nicht dargestellten Königszapfen eines Aufliegers. Die Lageröffnung 22 wird halbschalenartig von dem Verschleißring 14 umgeben. Der Verschleißring 14 ist aus einem hochschlagfesten Kunststoffmaterial gefertigt und kann nach dem Erreichen seiner Verschleißgrenze einfach ausgetauscht werden.

Die Verschlussmechanik 1 umfasst im wesentlichen den Verschlusshaken 4 und den in der gezeigten Verschlussstellung an dem Verschlusshaken 4 anliegenden Verschlussriegel 5. Der Verschlussriegel 5 verhindert in der Verschlussstellung ein Zurückschwenken des Verschlusshakens 4 in eine zur Aufnahme des Königszapfens vorgesehene Öffnungsstellung.

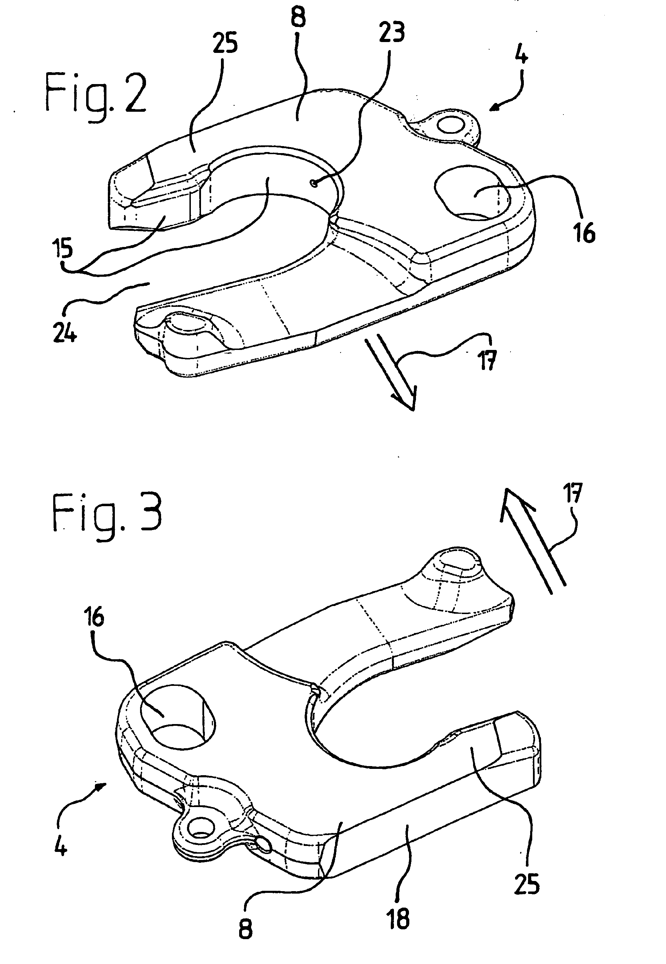

Der Verschlusshaken 4 ist unmittelbar an der Schmierleitung 7 angeschlossen. Für eine möglichst günstige Verteilung des Schmierfettes auf der am meisten der Reibung ausgesetzten Kontaktfläche 15 (siehe Fig. 2) des Verschlusshakens 4 zu dem nicht gezeigten Königszapfen, weist der Verschlusshaken 4 einen in radialer Richtung verlaufenden Schmierkanal 23 auf.

Das dem Verschlusshaken 4 abgewandte Ende der Schmierleitung 7 ist an einer Ventilsteuereinrichtung 12 angeschlossen, welche wiederum direkt an dem Fettreservoir 6 angreift. Das Fettreservoir 6 ist als Fettkartusche 9 ausgebildet und nimmt eine Fettmenge für einen Zeitraum von 2 bis 3 Jahren auf. In der gezeigten Darstellung ist die Fettkartusche 9 mit einem Antrieb 10 zum Ausschieben des Schmierfettes versehen, wobei der Antrieb 10 als chemischer Antrieb ausgebildet ist, das heißt der zum Schmierfettausschub notwendige Druckaufbau durch eine fortwährende chemische Reaktion erfolgt.

Eine kontrollierte und beeinflussbare Schmierfettdosierung, die allein mit einem chemischen Antrieb 10 der Fettkartusche 9 nicht möglich wäre, ist durch die Ventilsteuereinrichtung 12 möglich. Das wesentliche Bauteil der Ventilsteuereinrichtung 12 ist ein Absperrventil, welches von der variablen Steuereinrichtung 11 über Datenkabel 21 angesteuert wird und zwischen einer Verschlussstellung und einer Öffnungsstellung verschaltbar ist.

Bei der Steuereinrichtung 11 handelt es sich um einen Prozessrechner, der ebenfalls über Datenkabel 21 an einen Drucksensor 13 angeschlossen ist. In aufgesatteltem Zustand übt der Auflieger eine Auflast auf die Sattelkupplung 2 aus. Dieser Lastzustand wird von dem Drucksensor 13 sensiert, geht als Messwert in die variable Steuereinrichtung 11 ein und wird dort verarbeitet. Im Ergebnis gibt die variable Steuereinrichtung 11 bei Anwesenheit eines Aufliegers an ihrem Datenausgang ein Steuersignal zum Öffnen der Ventilsteuereinrichtung 12 ab. Bei nicht aufgesatteltem Auflieger dagegen wird die Ventilsteuereinrichtung 12 in eine Verschlussstellung gebracht, so dass kein Schmierfett aus der Fettkartusche 9 gelangt. Durch diese Vorgehensweise wird der Schmierfettverbrauch zusätzlich weiter gesenkt.

Das eingesetzte Schmierfett dient zur Reibungs- und Verschleißminderung. Dabei handelt es sich vorzugsweise um ein lithiumverseiftes Schmierfett mit einem Basisölgemisch und Additiven zur Optimierung der allgemeinen Schmierstoffeigenschaften wie Korrosions- und Alterungsschutz, Schmierfilmfestigkeit bzw. Hoch- und Tieftemperaturverhalten. Die Einsatztemperatur kann zwischen -35°C und 150°C liegen.

In der Fig. 2 ist perspektivisch entgegen der Fahrtrichtung 17 der Verschlusshaken 4 gezeigt. Der Verschlusshaken 4 ist in eingebautem Zustand um das Lagerloch 16 schwenkbar. Das Lagerloch 16 und der Schmierkanal 23 sind auf einer der Verschlussöffnung 24 gegenüberliegenden Seite des Verschlusshakens 4 angeordnet. In diesem Bereich ist der Verschlusshaken 4 mechanisch vergleichsweise gering belastet, so dass eine Schwächung des Bauteiles akzeptiert werden kann.

Ebenfalls in Fig. 2 sind an dem hinteren Schenkel 25 des Verschlusshakens 4 die Kontaktflächen 15, d.h. der auf der Innenseite liegende Kontaktbereich zu dem Königszapfen (nicht gezeigt), erkennbar. In diesem Bereich und dem Bereich der äußeren Kontaktfläche 18 (s. Fig.3) wäre eine selektive Beschichtung mit der erfindungsgemäßen Gleitbeschichtung 8 ausreichend. Aus fertigungstechnischen Gründen ist es jedoch einfacher und daher auch kostengünstiger, den Verschlusshaken vollständig mit der Gleitbeschichtung 8 zu versehen. Dies gilt auch für den Verschlussriegel.

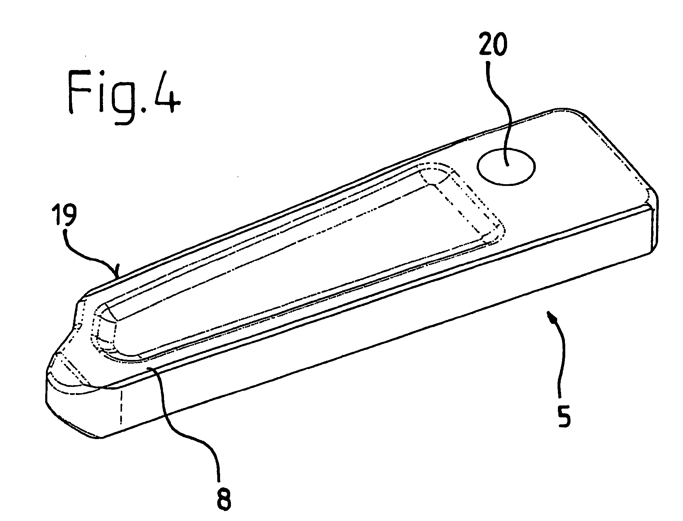

In Fig. 3 ist der Verschlusshaken entsprechend der Fig. 2 mit Blick in Fahrtrichtung 17 dargestellt. Auf der Außenseite des hinteren Schenkels 25 befindet sich die Kontaktfläche 18 zur Anlage des in Fig. 4 perspektivisch gezeigten Verschlussriegels 5. Die komplementär ausgebildete Kontaktfläche des Verschlussriegels 5 zu dem Verschlusshaken 4 ist als Kontaktfläche 19 gekennzeichnet. Auch der Verschlussriegel 5 ist vollständig mit der Gleitbeschichtung 8 ummantelt.

Der Verschlusshaken 4 ist in dem Lagerloch 20 gelagert und kann zum Freigeben des Verschlusshakens 4 seitlich herausgezogen werden.

### Bezugszeichenliste

- 1: Verschlussmechanik
- 2: Sattelkupplung
- 3: Kupplungsplatte
- 4: Verschlusshaken
- 5: Verschlussriegel
- 6: Fettreservoir
- 7: Schmierleitung
- 8: Gleitbeschichtung
- 9: Fettkartusche
- 10: Antrieb
- **11**: **variable Steuereinrichtung**
- 12: Ventilsteuereinrichtung
- 13: Drucksensor
- 14: Verschleißring
- 15: Kontaktfläche Verschlusshaken/Königszapfen
- 16: Lagerloch Verschlusshaken
- 17: Fahrtrichtung
- 18: Kontaktfläche Verschlusshaken/Verschlussriegel
- 19: Kontaktfläche Verschlussriegel/Verschlusshaken
- 20: Lagerloch Verschlussriegel
- 21: Datenkabel
- 22: Lageröffnung
- 23: Schmierkanal
- 24: Verschlussöffnung
- 25: hinterer Schenkel Verschlusshaken

## Patentansprüche

1. System zum Schmieren einer Verschlussmechanik (1) an Sattelkupplungen (2) mit einer an der Unterseite einer Kupplungsplatte (3) angeordneten Verschlussmechanik (1), die mindestens einen Verschlusshaken (4) und einen Verschlussriegel (5) aufweist, und einem Fettreservoir (6), welches über eine Schmierleitung (7) mit dem Verschlusshaken (4) verbunden ist,
**dadurch gekennzeichnet, dass** der Verschlusshaken (4) und/oder der Verschlussriegel (5) mit einer Beschichtung versehen ist, und
dass die Beschichtung des Verschlusshakens (4) und/oder Verschlussriegels (5) als Gleitbeschichtung (8) ausgebildet und das Fettreservoir (6) eine Fettkartusche (9) ist, wobei die Fettkartusche (9) an der Sattelkupplung (2) angeordnet ist.

2. System nach Anspruch 1, **dadurch gekennzeichnet, dass** die Fettkartusche (6) der Sattelkupplung (2) zugeordnet ist.

3. **System nach Anspruch 1 oder 2, dadurch gekennzeichnet, dass** die Fettkartusche (9) unterhalb der Kupplungsplatte (3) angeordnet ist.

4. System nach einem der Ansprüche 1 bis 3, **dadurch gekennzeichnet, dass** die Fettkartusche (9) einen Antrieb (10) aufweist.

5. System nach Anspruch 4, **dadurch gekennzeichnet, dass** der Antrieb (10) einen elektromechanischen Antrieb umfasst.

6. System nach Anspruch 4, **dadurch gekennzeichnet, dass** der Antrieb (10) einen chemischen Antrieb umfasst.

7. System nach einem der Ansprüche 4 bis 6, **dadurch gekennzeichnet, dass** der Antrieb (10) mit einer variablen Steuereinrichtung (11) verbunden ist.

8. System nach Anspruch 7, **dadurch gekennzeichnet, dass** die variable Steuereinrichtung (11) eine Motorsteuereinrichtung umfasst.

9. System nach Anspruch 7, **dadurch gekennzeichnet, dass** die variable Steuereinrichtung (11) eine Ventilsteuereinrichtung umfasst.

10. System nach Anspruch 9, **dadurch gekennzeichnet, dass** die Ventilsteuereinrichtung (12) ein in der Schmierleitung angeordnetes Mengenbegrenzungsventil umfasst.

11. System nach einem der Ansprüche 7 bis 10, **dadurch gekennzeichnet, dass** die variable Steuereinrichtung (11) mit einem Fahrzeugsteuergerät kommuniziert.

12. System nach einem der Ansprüche 7 bis 10, **dadurch gekennzeichnet, dass** die variable Steuereinrichtung (11) mit einem Kupplungssteuergerät kommuniziert.

13. System nach einem der Ansprüche 7 bis 10, **dadurch gekennzeichnet, dass** die variable Steuereinrichtung (11) mit einem an der Kupplungsplatte (3) angeordneten Drucksensor (13) kommuniziert.

14. System nach einem der Ansprüche 1 bis 13 mit einem Verschlusshaken (4) für den Einsatz in einer Sattelkupplung (2), bei dem mindestens eine äußere Fläche mit einer Beschichtung versehen ist, **dadurch gekennzeichnet, dass** die Beschichtung als Gleitbeschichtung (8) ausgebildet ist.

15. System nach Anspruch 14, **dadurch gekennzeichnet, dass** die Gleitbeschichtung (8) aus einem Mehrschichten-System aufgebaut ist.

16. System nach Anspruch 15, **dadurch gekennzeichnet, dass** das Mehrschichten-System mindestens aus einer ersten Schicht, welche eine Eisenlegierung mit Nickel- und Molybdänanteilen umfasst, und einer auf der ersten Schicht aufgebrachten zweiten Schicht aus PTFE aufgebaut ist.

17. System nach einem der Ansprüche 14 bis 16, **dadurch gekennzeichnet, dass** die Gleitbeschichtung (8) eine Schichtdicke von 50 µm bis 150 µm aufweist.

18. System nach Anspruch 17, **dadurch gekennzeichnet, dass** die Gleitbeschichtung (8) eine Schichtdicke von 70 µm bis 130 µm aufweist.

19. System nach einem der Ansprüche 1 bis 18 mit einem Verschlussriegel (5) für den Einsatz in einer Sattelkupplung (2), bei dem mindestens eine äußere Fläche mit einer Beschichtung versehen ist, **dadurch gekennzeichnet, dass** die Beschichtung als Gleitbeschichtung (8) ausgebildet ist.

## Claims

1. System for the lubrication of a locking mechanism (1) on fifth wheel couplings (2) with a locking mechanism (1) which is provided on the underside of a coupling plate (3) and has at least one locking hook (4) and one locking latch (5), and a grease reservoir (6) which is connected with the locking hook (4) by way of a lubrication line (7),
**characterised in that**
the locking hook (4) and/or the locking latch (5) is provided with a coating, and
that the coating of the locking hook (4) and/or locking latch (5) is formed as a slide coating (8) and the grease reservoir (6) is a grease cartridge (9), wherein the grease cartridge (9) is provided on the fifth wheel coupling (2).

2. System according to claim 1, **characterised in that** the grease cartridge (6) is assigned to the fifth wheel coupling (2).

3. System according to claim 1 or 2, **characterised in that** the grease cartridge (9) is provided beneath the coupling plate (3).

4. System according to one of claims 1 to 3, **characterised in that** the grease cartridge (9) has a drive (10).

5. System according to claim 4, **characterised in that** the drive (10) comprises an electromechanical drive.

6. System according to claim 4, **characterised in that** the drive (10) comprises a chemical drive.

7. System according to one of claims 4 to 6, **characterised in that** the drive (10) is connected to a variable control device (11).

8. System according to claim 7, **characterised in that** the variable control device (11) comprises a motor control device.

9. System according to claim 7, **characterised in that** the variable control device (11) comprises a valve control device.

10. System according to claim 9, **characterised in that** the valve control device (12) comprises a quantity limiting valve provided in the lubrication line.

11. System according to one of claims 7 to 10, **characterised in that** the variable control device (11) communicates with a vehicle control device.

12. System according to one of claims 7 to 10, **characterised in that** the variable control device (11) communicates with a coupling control device.

13. System according to one of claims 7 to 10, **characterised in that** the variable control device (11) communicates with a pressure sensor (13) provided on the coupling plate (3).

14. System according to one of claims 1 to 13 with a locking hook (4) for use in a fifth wheel coupling (2), in which at least one outside surface is provided with a coating, **characterised in that** the coating is formed as a slide coating (8).

15. System according to claim 14, **characterised in that** the slide coating (8) comprises a multi-layer system.

16. System according to claim 15, **characterised in that** the multi-layer system comprises at least a first layer comprising an iron alloy with nickel and molybdenum components, and, applied on the first layer, a second layer of PTFE.

17. System according to one of claims 14 to 16, **characterised in that** the slide coating (8) has a layer thickness of from 50 µm to 150 µm.

18. System according to claim 17, **characterised in that** the slide coating (8) has a layer thickness of from 70 µm to 130 µm.

19. System according to one of claims 1 to 18 with a locking latch (5) for use in a fifth wheel coupling (2), in which at least one outside surface is provided with a coating, **characterised in that** the coating is formed as a slide coating (8).

## Revendications

1. Système de lubrification d'un mécanisme de verrouillage (1) sur des sellettes d'attelage (2) comprenant un mécanisme de verrouillage disposé sur la face inférieure d'une plaque d'accouplement (3), qui présente au moins un crochet de verrouillage (4) et un pêne de verrouillage (5), ainsi qu'un réservoir de lubrifiant (6), lequel est relié au crochet de verrouillage (4) par l'intermédiaire d'une conduite de lubrification (7),
**caractérisé en ce**
**que** le crochet de verrouillage (4) et/ou le pêne de verrouillage (5) sont munis d'un revêtement, et
en ce que le revêtement du crochet de verrouillage (4) et/ou du pêne de verrouillage (5) est réalisé sous la forme d'un revêtement de glissement (8), et en ce que le réservoir de lubrifiant (6) est une cartouche de graisse (9), la cartouche de graisse (9) étant disposée sur la sellette d'attelage (2).

2. Système selon la revendication 1, **caractérisé en ce que** la cartouche de graisse (6) est associée à la sellette d'attelage (2).

3. Système selon la revendication 1 ou 2, **caractérisé en ce que** la cartouche de graisse (9) est disposée sous la plaque d'accouplement (3).

4. Système selon l'une quelconque des revendications 1 à 3, **caractérisé en ce que** la cartouche de graisse (9) présente un entraînement (10).

5. Système selon la revendication 4, **caractérisé en ce que** l'entraînement (10) comporte un entraînement électromécanique.

6. Système selon la revendication 4, **caractérisé en ce que** l'entraînement (10) comporte un entraînement chimique.

7. Système selon l'une quelconque des revendications 4 à 6, **caractérisé en ce que** l'entraînement (10) est relié à un dispositif de commande variable (11).

8. Système selon la revendication 7, **caractérisé en ce que** le dispositif de commande variable (11) comporte un dispositif de commande de moteur.

9. Système selon la revendication 7, **caractérisé en ce que** le dispositif de commande variable (11) comporte un dispositif de commande de soupape.

10. Système selon la revendication 9, **caractérisé en ce que** le dispositif de commande de soupape (12) comporte une soupape de régulation de débit disposée dans la conduite de lubrification.

11. Système selon l'une quelconque des revendications 7 à 10, **caractérisé en ce que** le dispositif de commande variable (11) communique avec un appareil de commande de véhicule.

12. Système selon l'une quelconque des revendications 7 à 10, **caractérisé en ce que** le dispositif de commande variable (11) communique avec un appareil de commande d'attelage.

13. Système selon l'une quelconque des revendications 7 à 10, **caractérisé en ce que** le dispositif de commande variable (11) communique avec un capteur de pression (13) disposé sur la plaque d'accouplement (3).

14. Système selon l'une quelconque des revendications 1 à 13, comprenant un crochet de verrouillage (4) pour l'utilisation dans une sellette d'attelage (2), dans le cadre duquel au moins une surface externe est munie d'un revêtement, **caractérisé en ce que** le revêtement est réalisé sous la forme d'un revêtement de glissement (8).

15. Système selon la revendication 14, **caractérisé en ce que** le revêtement de glissement (8) est constitué d'un système multi-couches.

16. Système selon la revendication 15, **caractérisé en ce que** le système multi-couches est constitué d'au moins une première couche, qui comporte un alliage de fer avec une teneur en nickel et en molybdène, et d'une deuxième couche en PTFE appliquée sur le première couche.

17. Système selon l'une quelconque des revendications 14 à 16, **caractérisé en ce que** le revêtement de glissement (8) présente une épaisseur de couche allant de 50 µm à 150 µm.

18. Système selon la revendication 17, **caractérisé en ce que** le revêtement de glissement (8) présente une épaisseur de couche allant de 70 µm à 130 µm.

19. Système selon l'une quelconque des revendications 1 à 18, comprenant un pêne de verrouillage (5) pour l'utilisation dans une sellette d'attelage (2), dans le cadre duquel au moins une surface externe est munie d'un revêtement, **caractérisé en ce que** le revêtement est réalisé sous la forme d'un revêtement de glissement (8).
